# EUROPÄISCHE PATENTSCHRIFT

(11) **EP 3 399 457 B1**
(45) Veröffentlichungstag und Bekanntmachung des Hinweises auf die Patenterteilung: **15.04.2020**
(21) Anmeldenummer: 17169468.0
(22) Anmeldetag: 04.05.2017
(51) Int. Cl.: G06F 21/64, H04L 29/06, H04L 29/08, H04W 12/00, H04W 12/12, H04W 4/00

(54) **VERFAHREN UND VORRICHTUNGEN ZUM ERKENNEN EINER MANIPULATION EINES GERÄTES**
METHOD AND DEVICES FOR DETECTING A MANIPULATION OF A DEVICE
PROCÉDÉ ET DISPOSITIFS DE RECONNAISSANCE D'UNE MANIPULATION D'UN APPAREIL

(43) Veröffentlichungstag der Anmeldung: 07.11.2018
(73) Patentinhaber: Siemens Aktiengesellschaft, 80333 München (DE)
(72) Erfinder: Falk, Rainer, 85586 Poing (DE)

(56) Entgegenhaltungen:
- WO-A1-2012/095235
- WO-A1-2012/166915
- US-A1- 2013 127 618

## Beschreibung

Die Erfindung bezieht sich auf Verfahren und Vorrichtungen zum rechnergestützten Erkennen einer Manipulation eines Gerätes.

Elektronische Geräte wie Steuergeräte und Kommunikationsgeräte realisieren IT-Sicherheitsfunktionen, die kryptographische Schlüssel verwenden. Diese müssen geheim auf der Plattform gespeichert sein.

WO 2012/166915 beschreibt ein konventionelles Verfahren, bei dem ein Gateway durch einen Sensor und ein Alarmpanel erkannte Manipulation verarbeitet. Hierbei sendet das Alarmpanel ein Ereignis, wenn der Sensor ausgelöst wurde.

US 2013/127618 beschreibt ein Verfahren zur Sicherheitsüberwachung in einem Machine-to-Machine Netzwerk. Die einzelnen Knoten des Netzwerkes fungieren als Sensoren und sammeln Daten, die von einer zentralen Einheit empfangen und ausgewertet werden.

WO 2012/095235 Beschreibt ein Verfahren zur Manipulationserkennung an einem Feld-Gerät. Manipulations-Sensoren am Gerät stellen sicher, dass keine Manipulation vorliegt, damit das Gerät an einem Schlüsselaustausch mit einem zentralen Server teilnehmen kann.

Eine Aufgabe der vorliegenden Erfindung ist es, Verfahren und Vorrichtungen bereitzustellen, die ein Erkennen einer Manipulation eines Gerätes dezentral erlauben.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Gemäß eines ersten Aspekts betrifft die Erfindung ein Verfahren zum rechnergestützten Erzeugen eines Sicherheitsdatensatzes zur Manipulationserkennung mit folgenden Verfahrensschritten:
- Erfassen von Messwerten über ein Gerät durch Sicherheitssensoren des Gerätes, wobei
   - die Messwerte unausgewertet sind;
- kryptographisches Schützen der Messwerte mittels eines symmetrischen und/oder asymmetrischen Verfahrens;
- Erzeugen des Sicherheitsdatensatzes durch das Gerät, wobei der Sicherheitsdatensatz die Messwerte umfasst;
- Bereitstellen des Sicherheitsdatensatzes an einer Kommunikationsschnittstelle durch das Gerät, insbesondere zum Bereitstellen für eine Auswerteeinrichtung.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu realisieren.

Unter "Bereitstellen" kann im Zusammenhang mit der Erfindung beispielsweise ein Übertragen oder Übermitteln des Sicherheitsdatensatzes an eine Auswerteeinrichtung durch das Gerät verstanden werden. Alternativ kann insbesondere unter Bereitstellen auch ein Abrufen des Sicherheitsdatensatzes durch die Auswerteeinrichtung von dem Gerät verstanden werden.

Unter unausgewerteten Messwerten können im Zusammenhang mit der Erfindung insbesondere Messwerte verstanden werden, die beispielsweise nicht ausgewertet sind, um eine Manipulation (Tamper) zu erkennen. Es liegt insbesondere noch keine Information vor, die angibt, ob beispielsweise eine Manipulation erkannt wurde. Es kann sich insbesondere bei den unausgewerteten Messdaten um digitalisierte Analogsensordaten handeln. Diese können beispielsweise auch durch eine allgemeine Vorverarbeitung bearbeitet worden sein. Eine Vorverarbeitung kann beispielsweise eine Codierung, eine Datenkomprimierung, eine Reduktion der Abtastrate, eine Reduktion der Bitbreite von digitalisierten Abtastwerten, eine FourierTransformation, eine Filterung (z.B. Bandpass-, Hochpass-, Tiefpass-Filterung) oder vergleichbare Signalverarbeitungsmethoden sein. Es ist insbesondere dabei jedoch noch keine Auswertung der Messwerte erfolgt, um zu detektieren, ob beispielsweise eine Manipulation vorliegt. Eine Manipulation kann beispielsweise unter Verwendung von Mustererkennungsalgorithmen, z. B. Merkmalsextraktion und Merkmalsklassifikation, erfolgen. Dabei kann beispielsweise ein neuronales Netzwerk verwendet werden. Insbesondere können unausgewertete Messwerte von einer Mehrzahl von Sensoren in Kombination ausgewertet werden. Dies ist vorteilhaft, um einen rechenaufwendigen und speicherintensiven Algorithmus zur Detektion einer Manipulation in einer separaten Auswerteeinrichtung, z. B. einem Cloud-Service, realisieren zu können. Der Manipulationserkennungsalgorithmus kann beispielsweise auf der Auswerteeinrichtung aktualisiert werden, um z. B. Fehlalarme zu vermeiden oder um bislang nicht erkannte Arten der Manipulationen zusätzlich zu erkennen. In einer Variante kann beispielsweise durch eine Konfiguration des Manipulationserkennungsalgorithmus vorgegeben werden, welche Art von Manipulationen erkannt werden. Dadurch kann insbesondere flexibel festgelegt werden, welche erkannten Ereignisse als Manipulation behandelt werden sollen. Unterschiedlich aufwendige Arten der Manipulationserkennung können beispielsweise dadurch als Dienst durch eine separate Auswerteeinrichtung bereitgestellt werden.

Das Verfahren ist zudem dahingehend vorteilhaft, um insbesondere Geräte zu realisieren, die selbst keine feste Manipulations-Erkennungslogik enthalten, wobei insbesondere im Zusammenhang mit der Erfindung eine Manipulation auch als Tamper bezeichnet wird. Insbesondere können die Messwerte von dem Gerät an ein Computersystem in Form eines Backends (z. B. eine Auswerteeinrichtung) übertragen werden. Beispielsweise sind die Tamper-Erkennungs-Algorithmen in der Auswerteeinrichtung realisiert und/oder können einfach aktualisiert werden, sodass das Gerät selbst nicht verändert werden muss. Auch können beispielsweise vorhandene Sensoren im Gerät, z. B. MEMS-Beschleunigungssensoren und/oder ein Mikrofon, ausgewertet werden, wodurch insbesondere eine günstigere Realisierung möglich ist und eine Manipulations-Erkennungsfunktion sogar auf existierenden Geräten nachgerüstet werden kann. Insbesondere kann ein handelsübliches Gerät, das z. B. für eine (sicherheits)kritische Aufgabe verwendet werden soll, (z. B. Possession Control in einem Bahnumfeld) mit der Erfindung um eine Manipulationsschutzfunktion ergänzt werden. Bei IoT-Geräten (Internet of Things Geräten), die ohnehin mit einem Computersystem, insbesondere über ein Datenkommunikationsnetzwerk wie z. B. einem Mobilfunknetzwerk oder dem Internet, kommunizieren, kann ebenfalls mit wenig Zusatzaufwand eine Tamper-Respondence-Funktionalität bzw. eine Manipulationserkennung realisiert werden. Durch das erfindungsgemäße Verfahren kann eine Manipulation bzw. ein Manipulations-Ereignis beispielsweise auch noch nachträglich erkannt und ausgewertet werden. Wird eine Manipulation erkannt, muss das insbesondere nicht sofort zu einem Sperren des Geräts führen, sondern kann beispielsweise abhängig von betrieblichen Erfordernissen für eine manuelle Überprüfung vorgemerkt werden. Bei einem Fehlalarm kann ein Gerät beispielsweise wieder aktiviert werden.

Bei einer ersten Ausführungsform des Verfahrens wird zum kryptographischen Schützen der Messwerte beim Erfassen mittels des symmetrischen und/oder des asymmetrischen Verfahrens kryptographisch geschützt, wobei insbesondere bei einem asymmetrischen Verfahren ausschließlich dem Gerät und/oder ausschließlich den jeweiligen Sicherheitssensoren ein privater Schlüssel bekannt ist.

Das Verfahren ist dahingehend vorteilhaft, um insbesondere eine Manipulation des Sicherheitsdatensatzes zu verhindern. Beispielsweise können die Messwerte hierzu mittels einer digitalen Signatur abgesichert sein oder symmetrisch oder asymmetrisch verschlüsselt sein.

Bei einer weiteren Ausführungsform des Verfahrens wird der Sicherheitsdatensatz beim Bereitstellen an eine Auswerteeinrichtung übertragen.

Bei einer weiteren Ausführungsform des Verfahrens wird zum kryptographischen Schützen eine Datenverbindung zum Übertagen des Sicherheitsdatensatzes zu einer oder der Auswerteeinrichtung mittels eines kryptographischen Verfahrens kryptographisch geschützt, wobei das kryptographische Verfahren das symmetrische und/oder asymmetrische Verfahren ist oder ein weiteres symmetrisches und/oder asymmetrisches Verfahren ist und insbesondere bei einem asymmetrischen Verfahren ausschließlich dem Gerät ein privater Schlüssel und/oder den jeweiligen Sicherheitssensoren ein privater Schlüssel bekannt ist.

Gemäß eines weiteren Aspekts betrifft die Erfindung ein Verfahren zum Erkennen einer Manipulation eines Gerätes durch eine Auswerteeinrichtung mit folgenden Verfahrensschritten:
- Festlegen von Sicherheitswerten für das Gerät;
- Bereitstellen eines Sicherheitsdatensatzes durch das Gerät, wobei
   - der Sicherheitsdatensatz Messwerte über das Gerät umfasst,
   - die Messwerte unausgewertet sind,
   - die Messwerte mittels eines symmetrischen und/oder asymmetrischen Verfahrens kryptographisch geschützt sind;
- Entschlüsseln und/oder kryptographisches Prüfen der Messwerte;
- Vergleichen der Messwerte mit den Sicherheitswerten durch die Auswerteeinrichtung, wobei
   - das Vergleichen erfolgt, wenn das Entschlüsseln und/oder kryptographisches Prüfen erfolgreich durchgeführt wird,
   - ein Steuersignal bereitgestellt wird,
- das Steuersignal ein Ergebnis des Vergleichens und/oder ein Ergebnis des Entschlüsselns und/oder des kryptographisches Prüfens umfasst.

Bei einer weiteren Ausführungsform des Verfahrens ist bei dem asymmetrischen Verfahren der Auswerteeinrichtung ein öffentlicher Schlüssel bekannt, der ein Schlüsselpaar mit einem privaten Schlüssel bildet, wobei der private Schlüssel ausschließlich dem Gerät bekannt ist.

Bei einer weiteren Ausführungsform des Verfahrens wird der Sicherheitsdatensatz beim Bereitstellen von dem Gerät an die Auswerteeinrichtung übertragen. Die Übertragung kann beispielsweise über eine direkte Verbindung oder über ein Kommunikationsnetzwerk, z. B. einem Mobilfunknetzwerk oder dem Internet, erfolgen.

Bei einer weiteren Ausführungsform des Verfahrens wird eine Datenverbindung zum Bereitstellen des Sicherheitsdatensatzes mittels eines kryptographischen Verfahrens kryptographisch geschützt, wobei das kryptographische Verfahren das symmetrische und/oder asymmetrische Verfahren ist oder ein weiteres symmetrisches und/oder asymmetrisches Verfahren ist und insbesondere bei einem asymmetrischen Verfahren ausschließlich dem Gerät ein privater Schlüssel und/oder den jeweiligen Sicherheitssensoren ein privater Schlüssel bekannt ist.

Bei einer weiteren Ausführungsform des Verfahrens werden die Messwerte drahtlos bereitgestellt.

Das Verfahren ist dahingehend vorteilhaft, damit insbesondere die Messwerte möglichst schnell z. B. an die Auswerteeinrichtung zu übermitteln, damit insbesondere mehrere Geräte zentral überwacht werden können.

Gemäß eines weiteren Aspekts betrifft die Erfindung ein Gerät zum rechnergestützten Erzeugen eines Sicherheitsdatensatzes zur Manipulationserkennung aufweisend:
- ein erstes Sensormodul zum Erfassen von Messwerten über das Gerät durch Sicherheitssensoren des Gerätes, wobei
   - die Messwerte unausgewertet sind;
- ein erstes Kryptomodul zum kryptographischen Schützen der Messwerte mittels eines symmetrischen und/oder asymmetrischen Verfahrens;
- ein erstes Verarbeitungsmodul zum Erzeugen des Sicherheitsdatensatzes durch das Gerät, wobei der Sicherheitsdatensatz die Messwerte umfasst;
- ein erstes Kommunikationsmodul zum Bereitstellen des Sicherheitsdatensatzes an einer Kommunikationsschnittstelle durch das Gerät, insbesondere zum Bereitstellen für eine Auswerteeinrichtung.

Bei einer weiteren Ausführungsform des Gerätes umfasst das Gerät zumindest ein weiteres Modul oder mehrere weitere Module zur Durchführung des erfindungsgemäßen Verfahrens (oder einer seiner Ausführungsformen) zum rechnergestützten Erzeugen eines Sicherheitsdatensatzes.

Gemäß eines weiteren Aspekts betrifft die Erfindung eine Auswerteeinrichtung zum Erkennen einer Manipulation eines Gerätes aufweisend:
- ein erstes Konfigurationsmodul zum Festlegen von Sicherheitswerten für das Gerät;
- ein zweites Kommunikationsmodul zum Bereitstellen eines Sicherheitsdatensatzes durch das Gerät, wobei
   - der Sicherheitsdatensatz Messwerte über das Gerät umfasst,
   - die Messwerte unausgewertet sind,
   - die Messwerte mittels eines symmetrischen und/oder asymmetrischen Verfahrens kryptographisch geschützt sind;
- ein zweites Kryptomodul zum Entschlüsseln und/oder kryptographischen Prüfen der Messwerte;
- ein zweites Verarbeitungsmodul zum Vergleichen der Messwerte mit den Sicherheitswerten durch die Auswerteeinrichtung, wobei
   - das Vergleichen erfolgt, wenn das Entschlüsseln und/oder kryptographische Prüfen erfolgreich durchgeführt wird,
   - ein Steuersignal bereitgestellt wird,
   - das Steuersignal ein Ergebnis des Vergleichens und/oder ein Ergebnis des Entschlüsselns und/oder des kryptographisches Prüfens umfasst.

Bei einer weiteren Ausführungsform der Auswerteeinrichtung umfasst die Auswerteeinrichtung zumindest ein weiteres Modul oder mehrere weitere Module zur Durchführung des erfindungsgemäßen Verfahrens (oder einer seiner Ausführungsformen) zum Erkennen einer Manipulation.

Gemäß eines weiteren Aspekts betrifft die Erfindung ein System zum Erkennen einer Manipulation eines Gerätes aufweisend:
- mindestens ein Gerät nach Anspruch 10;
- mindestens eine Auswerteinrichtung nach Anspruch 11;
- einen Kommunikationskanal mittels dessen das Gerät und die Auswerteeinrichtung miteinander kommunikativ verbunden sind.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die genannte erfindungsgemäße Auswerteeinrichtung und/oder das erfindungsgemäße System und/oder das erfindungsgemäße Gerät erstellt werden.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die erfindungsgemäße Auswerteeinrichtung und/oder das erfindungsgemäße System und/oder das erfindungsgemäße Gerät erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung als ein Ablaufdiagramm;
- Fig. 2: ein zweites Ausführungsbeispiel der Erfindung;
- Fig. 3: ein drittes Ausführungsbeispiel der Erfindung;
- Fig. 4: ein viertes Ausführungsbeispiel der Erfindung;
- Fig. 5: ein fünftes Ausführungsbeispiel der Erfindung;
- Fig. 6: ein sechstes Ausführungsbeispiel der Erfindung;
- Fig. 7: ein siebtes Ausführungsbeispiel der Erfindung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software (komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

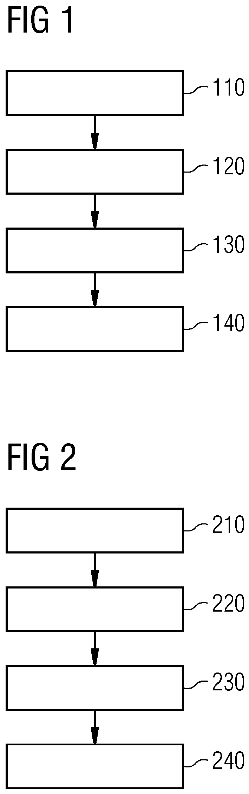

Die Fig. 1 zeigt ein erstes Ausführungsbeispiel der Erfindung als ein Ablaufdiagramm des erfindungsgemäßen Verfahrens zum rechnergestützten Erzeugen eines Sicherheitsdatensatzes zur Manipulationserkennung eines Gerätes.

Das Verfahren umfasst einen ersten Verfahrensschritt zum Erfassen 110 von Messwerten über das Gerät durch Sicherheitssensoren des Gerätes, wobei die Messwerte unausgewertet sind.

Die Messwerte können im Falle eine Manipulation Messwerte umfassen, die bei einer Auswertung der Messwerte diese Manipulation erkennen. Dies können beispielsweise Messwerte sein, die eine nicht erlaubte Bewegung des Gerätes (z. B. ein Abtransport) erkennen lassen.

Das Verfahren umfasst einen zweiten Verfahrensschritt zum kryptographischen Schützen 120 der Messwerte mittels eines symmetrischen und/oder asymmetrischen Verfahrens. Die Messwerte können dabei beispielsweise unmittelbar nach dem Erfassen direkt durch die Sicherheitssensoren selbst kryptographisch geschützt werden oder durch eine eigenständige Komponente (Hardware oder Software) des Gerätes kryptographisch geschützt werden.

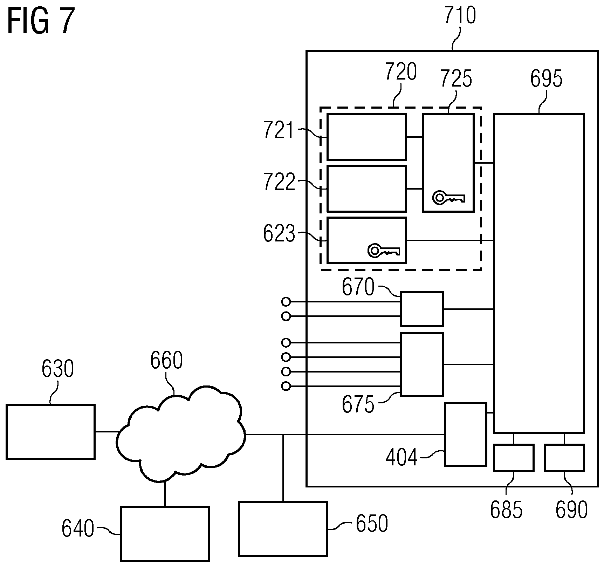

Die Sicherheitssensoren (oder das Sicherheitssensormodul) umfasst vorzugsweise als integrale Komponente eine Krypto Einheit (siehe Fig. 7). Die Sicherheitssensoren sind vorzugsweise für alle genannten Ausführungsbeispiele mittels mechanischen und/oder elektronischen und/oder softwarebasierten Mitteln vor externen Zugriffen geschützt und/oder erlauben nur einen beschränkten Zugriff (z. B. nur lesend) auf Daten (z. B. Messwerte) und/oder funktionieren vom restlichen Gerät autonom (z. B. über einen eigenen Arbeitsspeicher und/oder Prozessor verfügt). Beispielsweise können die Sicherheitssensoren abhängig von den Sicherheitsmechanismen die (kryptographisch geschützten) Messwerte in den Arbeitsspeicher des Gerätes zur weiteren Verarbeitung schreiben.

Das Verfahren umfasst einen dritten Verfahrensschritt zum Erzeugen 130 des Sicherheitsdatensatzes durch das Gerät, wobei der Sicherheitsdatensatz die kryptographisch geschützten Messwerte umfasst. Der Sicherheitsdatensatz kann beispielsweise zusätzlich analog zu den Messwerten kryptographisch geschützt werden. Hierzu können die gleichen kryptographischen Schlüssel verwendet werden oder andere kryptographische Schlüssel verwendet werden.

Das Verfahren umfasst einen vierten Verfahrensschritt 140 zum Bereitstellen des Sicherheitsdatensatzes an einer Kommunikationsschnittstelle durch das Gerät, insbesondere zum Bereitstellen für eine Auswerteeinrichtung.

Die Fig. 2 zeigt ein zweites Ausführungsbeispiel der Erfindung als ein Ablaufdiagramm des erfindungsgemäßen Verfahrens zum Erkennen einer Manipulation eines Gerätes (z. B. des Gerätes aus Fig. 1) durch eine Auswerteeinrichtung.

Das Verfahren umfasst einen ersten Verfahrensschritt zum Festlegen 210 von Sicherheitswerten für das Gerät.

Das Verfahren umfasst einen zweiten Verfahrensschritt 220 zum Bereitstellen eines Sicherheitsdatensatzes durch das Gerät, wobei der Sicherheitsdatensatz Messwerte über das Gerät umfasst, die Messwerte unausgewertet sind und die Messwerte mittels eines symmetrischen und/oder asymmetrischen Verfahrens kryptographisch geschützt sind. Auch kann der Sicherheitsdatensatz beispielsweise zusätzlich kryptographisch geschützt sein, so wie dies z. B. in Fig. 1 erläutert wurde.

Das Verfahren umfasst einen dritten Verfahrensschritt 230 zum Entschlüsseln und/oder kryptographischen Prüfen der Messwerte. Ist beispielsweise der Sicherheitsdatensatz ebenfalls kryptographisch geschützt, wird vor der Verarbeitung der Messwerte zunächst der Sicherheitsdatensatz kryptographisch geprüft und/oder entschlüsselt. Hierzu sind der Auswerteeinrichtung die notwendigen kryptographischen Schlüssel, z. B. über eine separate gesicherte Verbindung oder bei einer Wartung, bekannt gemacht worden.

Das Verfahren umfasst einen vierten Verfahrensschritt 240 zum Vergleichen der Messwerte mit den Sicherheitswerten durch die Auswerteeinrichtung, wobei das Vergleichen erfolgt, wenn das Entschlüsseln und/oder kryptographische Prüfen erfolgreich durchgeführt wird. Zudem wird ein Steuersignal bereitgestellt und das Steuersignal umfasst ein Ergebnis des Vergleichens und/oder ein Ergebnis des Entschlüsselns und/oder des kryptographischen Prüfens.

Mit anderen Worten zeigen die Fig. 1 und die Fig. 2 eine Erfindung, die zwei Teilverfahren umfasst. Im Einzelnen wird gezeigt, dass ein Gerät (z. B. Feldgerät, IoT-Device, Steuergerät, Hardware Security Modul, GNSS-Receiver) einen oder mehrere Sicherheitssensoren (z. B. Tamper-Sensoren) aufweist, deren Messwerte (z. B. Sensordaten) an eine separate Komponente (z. B. die Auswerteeinrichtung) zur Auswertung (Tamper-Detection bzw. Manipulationserkennung) übertragen werden.

Vorzugsweise stellen die Sicherheitssensoren Messwerte, z. B. über den Sicherheitsdatensatz, bereit, wobei die Messwerte durch ein kryptographisches Verfahren, z. B. einer Prüfsumme (message authentication code, digitale Signatur), geschützt sind. Zusätzlich oder alternativ kann der Sicherheitsdatensatz auch durch das kryptographische Verfahren geschützt sein. Dadurch wird insbesondere erreicht, dass der Sicherheitsdatensatz und/oder die Messwerte bei der Übertragung nicht durch Software oder andere Komponenten manipulierbar sind.

Dies kann beispielsweise durch in ein Sensormodul der Sicherheitssensoren integriertes Kryptographie-Modul (z. B. in Hardware oder Software) erfolgen, oder durch eine zusätzliche, von der Software-Ausführungsumgebung unabhängiges Kryptographie-Modul (Crypto Controller, Hardware Security Module).

Als Sicherheitssensoren können z. B. Bewegungssensoren, Lichtsensoren, Infrarotsensoren, Strahlungssensoren, Temperatursensoren, MEMS-Sensoren, Schalter, Näherungssensoren, verwendet werden. Diese erfassen die insbesondere physikalischen Rohdaten z. B. in Form der Messwerte.

Die Signalverarbeitungslogik zur Erkennung einer Manipulation des Gerätes ist außerhalb des Gerätes als Auswerteeinrichtung (insbesondere in einem Backend bzw. als Cloud-Service) realisiert. Diese führt insbesondere eine Merkmalsextraktion und Merkmalsklassifikation durch, um eine Manipulation zu detektieren.

Abhängig von der Auswertung (Manipulation-Erkennung) kann beispielsweise eine Gegenmaßnahme für das entsprechende Gerät automatisiert ausgeführt oder dem Gerät ein Zugriff auf eine sicherheitskritische Infrastruktur (z. B. in einem Stromverteilungsnetz) gegeben werden. Beispielsweise kann über das Steuersignal zusätzlich eine Freigabeinformation, insbesondere eines kryptographischen Credentials oder Schlüssels (z. B.: Sperren eines Gerätezertifikat, Bereitstellen eines kryptographischen Schlüssels für das Gerät, Bereitstellen eines Security-Tokens für das Gerät - z. B. JSON-Web-Token JWT, SAML-Token, Kerberos-Ticket). Es wird dabei eine, einem privaten bzw. geheimen Geräte-Schlüssel zugeordnete kryptographische Security-Credential-Information (insbesondere ein Gerätezertifikat, Security Token) als ungültig gekennzeichnet oder nicht bereitgestellt, sodass andere Geräte diese nicht als gültig erkennen. Dadurch ist bei einer Manipulation eines Gerätes zwar nicht notwendigerweise dessen privater bzw. geheimer Geräteschlüssel gelöscht oder gesperrt. Er ist aber nicht mehr nutzbar, da keine zugeordnete gültige Security-Credential-Information vorliegt. Alternativ oder zusätzlich kann bei einem Erkennen einer Manipulation das Gerät gesperrt werden (z. B. Sperren des betroffenen Gerätes in einem Device-IAM-System). In einer Variante prüft eine Komponente zur Ausstellung eines Security-Credentials (IAM-System, Certification Authority) beim Ausstellen eines Security-Credentials für ein Gerät dessen Manipulationsstatus. Weiterhin kann einem Gerät bei einer erkannten Manipulation eine Löschkommandonachricht oder ein Löschsignal bereitgestellt werden, durch die das Gerät sensible Daten, insbesondere Konfigurationsdaten, kryptographische Schlüssel oder Programmcode löscht. Ein Manipulationsstatus eines Gerätes kann gespeichert werden. Wenn eine Manipulation anhand von bereitgestellten unausgewerteten Sensordaten eines Gerät erkannt wurde, so wird dadurch auch künftig eine Manipulation erkannt, auch wenn die Auswertung von weiteren bereitgestellten unausgewerteten Sensordaten keine (weitere) Manipulation ergibt. In einer Variante kann der Manipulationsstatus zurückgesetzt werden, z.B. durch Eingabe eines Rücksetzcodes.

In einer weiteren Variante werden die Messwerte bzw. der Sicherheitsdatensatz zyklisch oder innerhalb eines vorgegebenen Zeitintervalls an die Auswerteeinrichtung übertragen. Diese Messwerte bzw. Sicherheitsdatensätze werden auch übertragen, wenn die Sicherheitssensoren keine Änderung von Messwerten erfassen.

In einer weiteren Variante wird bei einem Ausbleiben des Sicherheitsdatensatzes bzw. beim Überschreiten eines vorgegebenen Zeitintervalls ohne eine Übertragung eines Sicherheitsdatensatzes eine Manipulation des Gerätes erkannt und wie oben erwähnt, das Gerät z. B. gesperrt oder durch einen Techniker überprüft.

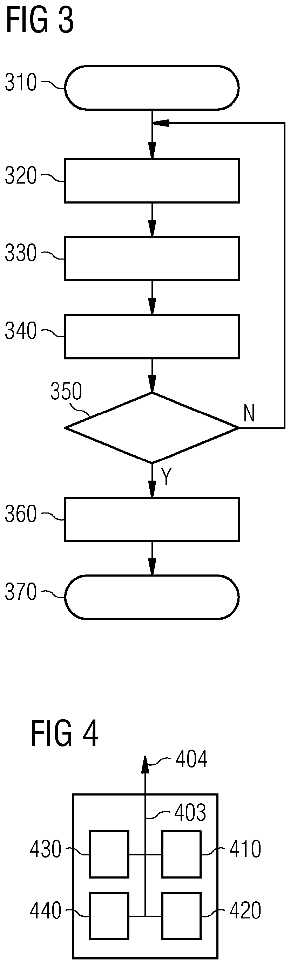

Die Fig. 3 zeigt ein drittes Ausführungsbeispiel der Erfindung als ein Ablaufdiagramm, das die Verfahren aus Fig. 1 und Fig. 2 kombiniert.

Das Verfahren beginnt beispielsweise mit dem Starten des Gerätes in Schritt 310. Die Messwerte werden in Schritt 320 erfasst, der Sicherheitsdatensatz gebildet und dann kryptographisch geschützt. Der Sicherheitsdatensatz wird dann in Schritt 330 an die Auswerteeinrichtung übertragen. Die Auswerteeinrichtung wertet im Schritt 340 die Messwerte aus. Abhängig von der Auswertung wird in Schritt 350 ggf. eine Manipulation erkannt Y oder es wird keine Manipulation erkannt N. Wird eine Manipulation erkannt Y, so kann die Auswerteeinrichtung über das Steuersignal das Gerät im Schritt 360 sperren oder dieses Gerät ausschalten (z. B. indem die Stromversorgung mittels des Steuersignals ausgeschaltet wird, oder indem eine Netzwerkschnittstelle oder ein Kommunikationsmodul deaktiviert werden, oder indem eine Verbindung zu einer verbundenen Antenne oder einem Netzwerkkabel elektrisch unterbrochen werden). Danach endet das Verfahren mit Schritt 370 für den Fall einer erkannten Manipulation.

Wurde keine Manipulation erkannt N so springt das Verfahren wieder auf Schritt 320 zurück und Messwerte werden wieder erfasst, ein Sicherheitsdatensatz gebildet und dann kryptographisch geschützt usw.

Die Fig. 4 zeigt ein viertes Ausführungsbeispiel der Erfindung in Form eines Gerätes zum rechnergestützten Erzeugen eines Sicherheitsdatensatzes zur Manipulationserkennung.

Im Einzelnen zeigt Fig. 4 ein Gerät mit einem ersten Sensormodul 410, einem ersten Verarbeitungsmodul 430, einem ersten Kryptomodul 420, einem ersten Kommunikationsmodul 440 und eine erste Kommunikationsschnittstelle 404, die über einen ersten Bus 403 miteinander kommunikativ verbunden sind.

Das Gerät kann beispielsweise zusätzlich noch eine weitere oder mehrere weitere Komponente/n umfassen, wie beispielsweise einen Prozessor, eine Speichereinheit, ein Eingabegerät, insbesondere eine Computertastatur oder eine Computermaus, und ein Anzeigegerät (z. B. einen Monitor). Der Prozessor kann beispielsweise mehrere weitere Prozessoren umfassen, wobei beispielsweise die weiteren Prozessoren jeweils eines oder mehrere der Module realisieren. Alternativ realisiert der Prozessor insbesondere alle Module des Ausführungsbeispiels. Die weitere/n Komponente/n können beispielsweise ebenfalls über den ersten Bus 403 miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das erste Sensormodul 410 ist zum Erfassen von Messwerten über das Gerät durch Sicherheitssensoren des Gerätes eingerichtet, wobei die Messwerte unausgewertet sind.

Das erste Sensormodul 410 kann beispielsweise mittels des Prozessors, der Speichereinheit und einer ersten Programmkomponente realisiert werden, wobei beispielsweise durch ein Ausführen von Programmbefehlen der ersten Programmkomponente der Prozessor derart konfiguriert wird oder durch die Programmbefehle der Prozessor derart konfiguriert ist, dass die Messwerte durch die Sicherheitssensoren erfasst werden.

Das erste Kryptomodul 420 ist zum kryptographischen Schützen der Messwerte mittels eines symmetrischen und/oder asymmetrischen Verfahrens eingerichtet.

Das erste Kryptomodul 420 kann beispielsweise mittels des Prozessors, der Speichereinheit und einer zweiten Programmkomponente realisiert werden, wobei beispielsweise durch ein Ausführen von Programmbefehlen der zweiten Programmkomponente der Prozessor derart konfiguriert wird oder durch die Programmbefehle der Prozessor derart konfiguriert ist, dass die Messwerte kryptographisch geschützt werden.

Das erste Verarbeitungsmodul 430 ist zum Erzeugen des Sicherheitsdatensatzes durch das Gerät eingerichtet, wobei der Sicherheitsdatensatz die kryptographisch geschützten Messwerte umfasst.

Das erste Verarbeitungsmodul 430 kann beispielsweise mittels des Prozessors, der Speichereinheit und einer dritten Programmkomponente realisiert werden, wobei beispielsweise durch ein Ausführen von Programmbefehlen der dritten Programmkomponente der Prozessor derart konfiguriert wird oder durch die Programmbefehle der Prozessor derart konfiguriert ist, dass die Sicherheitsdatensatz erzeugt wird.

Das erste Kommunikationsmodul 440 ist zum Bereitstellen des Sicherheitsdatensatzes an der Kommunikationsschnittstelle 404 durch das Gerät eingerichtet. Insbesondere ist das erste Kommunikationsmodul zum Bereitstellen des Sicherheitsdatensatzes für eine Auswerteeinrichtung eingerichtet.

Das erste Kommunikationsmodul 440 kann beispielsweise mittels des Prozessors, der Speichereinheit und einer vierten Programmkomponente realisiert werden, wobei beispielsweise durch ein Ausführen von Programmbefehlen der vierten Programmkomponente der Prozessor derart konfiguriert wird oder durch die Programmbefehle der Prozessor derart konfiguriert ist, dass der Sicherheitsdatensatz kryptographisch bereitgestellt wird.

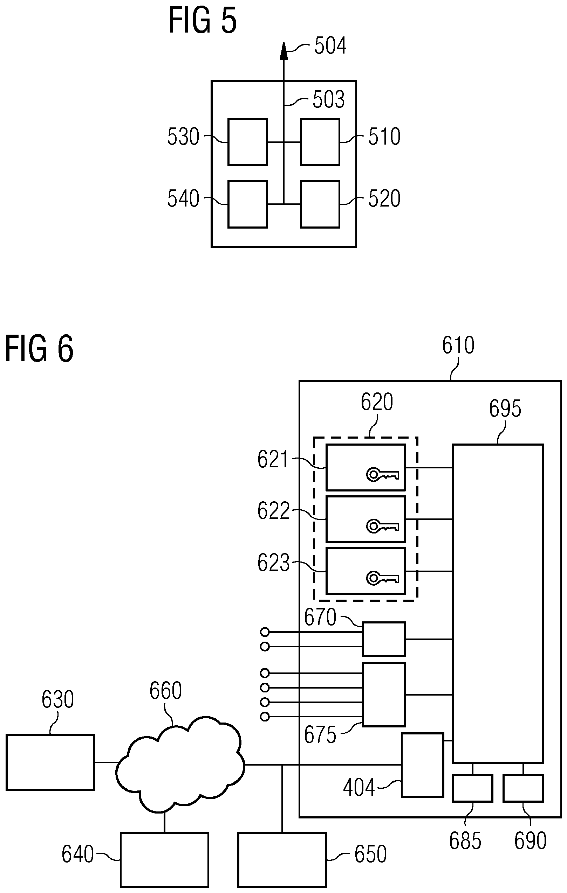

Die Fig. 5 zeigt ein fünftes Ausführungsbeispiel der Erfindung in Form einer Auswerteeinrichtung zum rechnergestützten Erkennen einer Manipulation eines Gerätes.

Im Einzelnen zeigt Fig. 5 eine Auswerteeinrichtung umfassend ein erstes Konfigurationsmodul 510, zweites Kommunikationsmodul 520, ein zweites Kryptomodul 530, ein zweites Verarbeitungsmodul 540 und eine zweite Kommunikationsschnittstelle 504, die über einen zweiten Bus 503 miteinander kommunikativ verbunden sind.

Das Gerät kann beispielsweise zusätzlich noch eine weitere oder mehrere weitere Komponente/n umfassen, wie beispielsweise einen Prozessor, eine Speichereinheit, ein Eingabegerät, insbesondere eine Computertastatur oder eine Computermaus, und ein Anzeigegerät (z. B. einen Monitor). Der Prozessor kann beispielsweise mehrere weitere Prozessoren umfassen, wobei beispielsweise die weiteren Prozessoren jeweils eines oder mehrere der Module realisieren. Alternativ realisiert der Prozessor insbesondere alle Module des Ausführungsbeispiels. Die weitere/n Komponente/n können beispielsweise ebenfalls über den zweiten Bus 503 miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das erste Konfigurationsmodul 510 ist zum Festlegen von Sicherheitswerten für das Gerät eingerichtet.

Das erste Konfigurationsmodul 510 kann beispielsweise mittels des Prozessors, der Speichereinheit und einer ersten Programmkomponente realisiert werden, wobei beispielsweise durch ein Ausführen von Programmbefehlen der ersten Programmkomponente der Prozessor derart konfiguriert wird oder durch die Programmbefehle der Prozessor derart konfiguriert ist, dass die Sicherheitswerte festgelegt werden. Dies kann beispielsweise über eine Sicherheitsrichtline oder eine Konfigurationsdatei erfolgen.

Das zweite Kommunikationsmodul 520 ist zum Bereitstellen eines Sicherheitsdatensatzes durch das Gerät eingerichtet, wobei der Sicherheitsdatensatz Messwerte über das Gerät umfasst, die Messwerte unausgewertet sind und die Messwerte mittels eines symmetrischen und/oder asymmetrischen Verfahrens kryptographisch geschützt sind.

Das zweite Kommunikationsmodul 520 kann beispielsweise mittels des Prozessors, der Speichereinheit und einer zweiten Programmkomponente realisiert werden, wobei beispielsweise durch ein Ausführen von Programmbefehlen der zweiten Programmkomponente der Prozessor derart konfiguriert wird oder durch die Programmbefehle der Prozessor derart konfiguriert ist, dass der Sicherheitsdatensatz bereitgestellt wird. Das Kommunikationsmodul kann hierzu beispielsweise den Sicherheitsdatensatz an der zweiten Kommunikationsschnittstelle 504 empfangen, wobei der Sicherheitsdatensatz über eine erste Kommunikationsschnittstelle des Gerätes durch das Gerät übertragen wurde.

Das zweite Kryptomodul 530 ist zum Entschlüsseln und/oder kryptographischen Prüfen der Messwerte eingerichtet.

Das zweite Kryptomodul 530 kann beispielsweise mittels des Prozessors, der Speichereinheit und einer dritten Programmkomponente realisiert werden, wobei beispielsweise durch ein Ausführen von Programmbefehlen der dritten Programmkomponente der Prozessor derart konfiguriert wird oder durch die Programmbefehle der Prozessor derart konfiguriert ist, dass der Sicherheitsdatensatz entschlüsselt und/oder kryptographisch geprüft wird.

Das zweite Verarbeitungsmodul 540 ist zum Vergleichen der Messwerte mit den Sicherheitswerten durch die Auswerteeinrichtung eingerichtet, wobei das Vergleichen erfolgt, wenn das Entschlüsseln und/oder kryptographische Prüfen erfolgreich durchgeführt wird. Zudem wird ein Steuersignal bereitgestellt und das Steuersignal umfasst ein Ergebnis des Vergleichens und/oder ein Ergebnis des Entschlüsselns und/oder des kryptographischen Prüfens.

Das zweite Verarbeitungsmodul 540 kann beispielsweise mittels des Prozessors, der Speichereinheit und einer vierten Programmkomponente realisiert werden, wobei beispielsweise durch ein Ausführen von Programmbefehlen der vierten Programmkomponente der Prozessor derart konfiguriert wird oder durch die Programmbefehle der Prozessor derart konfiguriert ist, dass die Messwerte verglichen werden.

Die Fig. 6 zeigt ein sechstes Ausführungsbeispiel der Erfindung in Form eines Systems bei dem ein Gerät 610 (z. B. das Gerät aus Fig. 4) und eine Auswerteeinrichtung 630 (z. B. die Auswerteeinrichtung aus Fig. 5) über ein Netzwerk 660 miteinander kommunikativ verbunden sind.

Das Gerät 610 (z. B. ein IoT Gerät oder ein Feldgerät) umfasst Ein- und Ausgabeschnittstellen, (z. B. einen Analog-Digitalwandler/Digital-Analogwandler 670 (AD/DA) und eine Allzweckeingabe/-ausgabe 675 (engl. GPIO - general purpose input/output)), eine erste Kommunikationsschnittstelle 404 (z. B. eine Ethernet-Schnittstellte), einen Arbeitsspeicher 685, einen Flash-Speicher 690 und einen Steuereinheit 695 (z. B. ein Prozessor).

Im Flash-Speicher 690 ist z. B. ein privater Schlüssel (z. B. ein privater Geräteschlüssel) für das asymmetrische kryptographische Verfahren abgelegt, mit dem sich das Gerät 610 gegenüber der Auswerteeinrichtung 630 (z. B. Backend-Diensten) oder anderen Geräten authentisieren kann (z.B. ein privater RSA-Schlüssel oder ein privater ECDSA-Schlüssel). Außerdem kann das Gerät 610 über ein digitales Gerätezertifikat (z.B. ein X.509-Zertifikat) verfügen. Damit kann das Gerät z. B. eine authentisierte TLS-Kommunikationsverbindung über das Netzwerk 660 zu einem Device Authentication Server 640 aufbauen, der dem Gerät 610 einen Sicherheits-Token (Z. B. einen Security Token oder einen JWT-Token) bereitstellt.

Das Gerät umfasst Sicherheitssensoren 620, beispielsweise ein Mikrophon 621, MEMS-Bewegungssensoren 622 und Lichtsensoren 623, die kryptographisch geschützte Messdaten der Steuereinheit 695 bereitstellen. Die Sicherheitssensoren sind jeweils in der Lage (durch das Schlüsselsymbol dargestellt) ihre jeweiligen Messwerte kryptographisch zu schützen.

Die Steuereinheit 695 baut beispielsweise eine TLS-Kommunikationsverbindung, unter Verwendung des privaten Geräteschlüssels, mit einer lokalen Auswerteinrichtung 650 auf. Die lokalen Auswerteinrichtung 650 ist beispielsweise im lokalen Netzwerk angeordnet. Alternativ wird TLS-Kommunikationsverbindung mit der entfernten Auswerteeinrichtung 630 aufgebaut, die beispielsweise über das Internet angebunden ist. Nach diesem Verbindungsaufbau überträgt das Gerät 610 regelmäßig, kontinuierlich (streaming) oder auf Anfrage die Sicherheitsdaten an die lokale Auswerteeinrichtung 650 und/oder an die entfernte Auswerteeinrichtung.

Der Sicherheitsdatensatz und/oder die Messwerte sind dabei kryptographisch geschützt. Dies kann beispielsweise mittels einer kryptographischen Prüfsumme realisiert werden, die durch den jeweiligen Sicherheitssensor für ihre jeweiligen Messwerte gebildet wurden. Hierzu kann beispielsweise ein eindeutiger Identifizierer eines jeweiligen Sicherheitssensors mit dem privaten Schlüssel kombiniert werden oder der private Schlüssel alleine zum Bilden der jeweiligen kryptographischen Prüfsumme verwendet werden.

Durch die Auswerteeinrichtungen 630, 650 wird beispielsweise die kryptographische Prüfsumme des jeweiligen Sensors auf ihre Gültigkeit überprüft.

Außerdem wird überprüft, dass die Messwerte der Sicherheitssensoren des authentisierten Sensorwerts tatsächlich zu dem authentisierten Gerät gehören (dies kann beispielsweise mittels der TLS-Verbindung erfolgen).

Durch die Auswerteeinrichtungen 630, 650 werden die Messwerte bzw. der jeweilige Sicherheitsdatensatz mittels Analysealgorithmen unter Verwendung Sicherheitswerte analysiert (z.B. Schwellwerte, Dynamik, Mustererkennung). Die Sicherheitswerte können beispielsweise Schwellwerte festlegen, die insbesondere bestimmen, dass ein Gerät nicht bewegt werden darf oder sich nicht in einer Umgebung mit hellem Licht befinden soll.

Wird beispielsweise eine Manipulation erkannt (z. B. ein Tamper-Ereignis), wird dem Device Authentication Service 640 eine Sperrnachricht mittels des Steuersignals übermittelt. Dies führt dazu, dass der Device Authentication Server 640 das Gerät 610 nicht mehr als gültig akzeptiert und dem Gerät 610 keine Sicherheits-Token (z. B. JWT-Token) mehr bereitstellt.

Damit ist das Gerät 610 bzw. dessen digitales Zertifikat nicht mehr nutzbar. Somit ist insbesondere eine Funktionalität zur automatisierten Behandlung von erkannten Manipulationen (engl. Tamper-Respondence) für das Gerät 610 realisiert worden, ohne dass das Gerät 610 selbst eine aufwendige Tampersignal-Auswertelogik bzw. Signalverarbeitung zur Manipulationserkennung realisieren muss.

In einer Variante wird zusätzlich der private Schlüssel für ungültig erklärt, damit auch dieser nicht mehr nutzbar ist.

Die Fig. 7 zeigt ein siebtes Ausführungsbeispiel der Erfindung als Variante des Systems aus Fig. 6. Es sind wie in Fig. 6 ein Gerät 710 (z. B. das Gerät aus Fig. 4) und eine Auswerteeinrichtung 630 (z. B. die Auswerteeinrichtung aus Fig. 5) über ein Netzwerk 660 miteinander kommunikativ verbunden.

Im Einzelnen zeigt die Fig. 7 im Gegensatz zu Fig. 6, dass zwei der Sicherheitssensoren 720, und zwar das Mikrophon und die MEMS Bewegungssensoren aus Fig. 6, nicht unmittelbar selbst die kryptographisch geschützten Messwerte erfassen bzw. bereitstellen. Stattdessen sind diese beiden Sensoren durch ein einfaches Mikrophon 721 und MEMS-Sensoren 722 ohne Kryptofunktion (in der Fig. 7 daran erkennbar, da sie kein Schlüsselsymbol aufweisen) ersetzt worden. Um die Messwerte nun kryptographisch zu schützen, wird eine separate Kryptoeinheit 725 (z. B. ein Crypto-Controller (CC) der als Softwarekomponente realisiert ist) verwendet.

Die Sicherheitssensoren 720 (oder das Sicherheitssensormodul) umfassen vorzugsweise als integrale Komponente die Kryptoeinheit 725. Die Sicherheitssensoren 720 sind beispielsweise mittels mechanischen und/oder elektronischen und/oder softwarebasierten Mitteln vor externen Zugriffen geschützt und funktionieren vom restlichen Gerät 710 autonom (z. B. über einen eigenen Arbeitsspeicher und/oder Prozessor verfügt). Die Sicherheitssensoren 720 können ggf. für die Erfindung die Messwerte in den Arbeitsspeicher 685 zur weiteren Verarbeitung schreiben.

Dies ist vorteilhaft um auch Sensoren ohne Funktionalität zum kryptographischen Schutz der Sensordaten als Sicherheitssensoren (z. B. als Tamper-Sensoren) zu verwenden.

Eine Kryptoeinheit ist dabei beispielsweise ein Hardware-Security-Baustein, der kryptographische Berechnungen in einer geschützten Umgebung ausführt (z.B. Chipkarten-Controller, Hardware Security Module, Trusted Platform Module).

Auch bei dieser Realisierungsvariante können die Messwerte (z. B. Sensordaten) nicht durch eine auf der Steuereinheit 695 ausgeführten Software manipuliert werden. Die Sicherheitssensoren können in das Gerät fest integriert sein, oder es kann sich um ein separates Modul handeln (z.B. Security-Steckmodul, Shield).

Mit der Erfindung und deren Ausführungsbeispiele ist es möglich, die Messwerte von Sicherheitssensoren eines Gerätes an eine Auswerteeinrichtung zu übertragen, um Manipulationen zu erkennen. Damit eine möglichst hohe Sicherheit erreicht wird, sind die Sicherheitssensoren derart eingerichtet, dass sie die Messwerte nach dem Erfassen für die Übertragung an die Auswerteeinrichtung kryptographisch schützen. Die Auswerteeinrichtung kann diesen kryptographischen Schutz auswerten (z. B. kryptographisches Prüfen - insbesondere eine digitalen Signatur - oder entschlüsseln der Messwerte) und zusätzlich die Messwerte auswerten, um festzustellen ob ein entsprechendes Gerät manipuliert wurde.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Verfahren zum rechnergestützten Erzeugen eines Sicherheitsdatensatzes zur Manipulationserkennung mit folgenden Verfahrensschritten:
- Erfassen (110) von Messwerten über ein Gerät durch Sicherheitssensoren (620, 720) des Gerätes, wobei
- die Messwerte unausgewertet sind;
- kryptographisches Schützen (120) der Messwerte mittels eines symmetrischen und/oder asymmetrischen Verfahrens;
- Erzeugen (130) des Sicherheitsdatensatzes durch das Gerät, wobei der Sicherheitsdatensatz die Messwerte umfasst;
- Bereitstellen (140) des Sicherheitsdatensatzes an einer Kommunikationsschnittstelle durch das Gerät, wobei
- der Sicherheitsdatensatz beim Bereitstellen an eine Auswerteeinrichtung übertragen wird,
- eine Manipulation des Gerätes durch die Auswerteeinrichtung anhand des Sicherheitsdatensatzes erkennbar ist,
- die Messwerte zyklisch oder innerhalb eines vorgegebenen Zeitintervalls an die Auswerteeinrichtung übertragen werden,
- diese Messwerte auch übertragen werden, wenn die Sicherheitssensoren keine Änderung von Messwerten erfassen.

2. Verfahren nach Anspruch 1, wobei zum kryptographischen Schützen der Messwerte beim Erfassen mittels des symmetrischen und/oder asymmetrischen Verfahrens kryptographisch geschützt wird, wobei insbesondere bei einem asymmetrischen Verfahren ausschließlich dem Gerät und/oder ausschließlich den jeweiligen Sicherheitssensoren (620, 720) ein privater Schlüssel bekannt ist.

3. Verfahren nach einem der vorhergehenden Ansprüche, wobei
- zum kryptographischen Schützen eine Datenverbindung zum Übertragen des Sicherheitsdatensatzes zu einer oder der Auswerteeinrichtung mittels eines kryptographischen Verfahrens kryptographisch geschützt wird,
- das kryptographische Verfahren das symmetrische und/oder asymmetrische Verfahren ist oder ein weiteres symmetrisches und/oder asymmetrisches Verfahren ist,
- insbesondere bei einem asymmetrischen Verfahren ausschließlich dem Gerät ein privater Schlüssel und/oder den jeweiligen Sicherheitssensoren (620, 720) ein privater Schlüssel bekannt ist.

4. Verfahren zum Erkennen einer Manipulation eines Gerätes durch eine Auswerteeinrichtung mit folgenden Verfahrensschritten:
- Festlegen von Sicherheitswerten für das Gerät;
- Bereitstellen eines Sicherheitsdatensatzes durch das Gerät, wobei
- der Sicherheitsdatensatz Messwerte über das Gerät umfasst,
- die Messwerte unausgewertet sind,
- die Messwerte mittels eines symmetrischen und/oder asymmetrischen Verfahrens kryptographisch geschützt sind,
- die Messwerte durch Sicherheitssensoren des Gerätes erfasst werden,
- die Messwerte zyklisch oder innerhalb eines vorgegebenen Zeitintervalls an die Auswerteeinrichtung übertragen werden,
- diese Messwerte auch übertragen werden, wenn die Sicherheitssensoren keine Änderung von Messwerten erfassen,
- Entschlüsseln und/oder kryptographisches Prüfen der Messwerte;
- Vergleichen der Messwerte mit den Sicherheitswerten durch die Auswerteeinrichtung, wobei
- das Vergleichen erfolgt, wenn das Entschlüsseln und/oder kryptographische Prüfen erfolgreich durchgeführt wird,
- ein Steuersignal bereitgestellt wird,
- das Steuersignal ein Ergebnis des Vergleichens und/oder ein Ergebnis des Entschlüsselns und/oder des kryptographischen Prüfens umfasst.

5. Verfahren nach Anspruch 4, wobei
- bei dem asymmetrischen Verfahren der Auswerteeinrichtung ein öffentlicher Schlüssel bekannt ist, der ein Schlüsselpaar mit einem privaten Schlüssel bildet,
- wobei der private Schlüssel ausschließlich dem Gerät und/oder jeweiligen Sicherheitssensoren (620, 720) des Gerätes bekannt ist.

6. Verfahren nach Anspruch 4 oder 5, wobei der Sicherheitsdatensatz beim Bereitstellen von dem Gerät an die Auswerteeinrichtung übertragen wird.

7. Verfahren nach einem der vorhergehenden Ansprüche, wobei
- eine Datenverbindung zum Bereitstellen des Sicherheitsdatensatzes mittels eines kryptographischen Verfahrens kryptographisch geschützt wird,
- das kryptographische Verfahren das symmetrische und/oder asymmetrische Verfahren ist oder ein weiteres symmetrisches und/oder asymmetrisches Verfahren ist,
- insbesondere bei einem asymmetrischen Verfahren ausschließlich dem Gerät ein privater Schlüssel und/oder den jeweiligen Sicherheitssensoren (620, 720) ein privater Schlüssel bekannt ist.

8. Verfahren nach einem der vorhergehenden Ansprüche, die Messwerte drahtlos bereitgestellt werden.

9. Gerät zum rechnergestützten Erzeugen eines Sicherheitsdatensatzes zur Manipulationserkennung aufweisend:
- ein erstes Sensormodul (410) zum Erfassen von Messwerten über das Gerät durch Sicherheitssensoren (620, 720) des Gerätes, wobei
- die Messwerte unausgewertet sind;
- ein erstes Kryptomodul (420) zum kryptographischen Schützen der Messwerte mittels eines symmetrischen und/oder asymmetrischen Verfahrens;
- ein erstes Verarbeitungsmodul (430) zum Erzeugen des Sicherheitsdatensatzes durch das Gerät, wobei der Sicherheitsdatensatz die Messwerte umfasst;
- ein erstes Kommunikationsmodul (440) zum Bereitstellen des Sicherheitsdatensatzes an einer Kommunikationsschnittstelle (404) durch das Gerät, wobei
- der Sicherheitsdatensatz beim Bereitstellen an eine Auswerteeinrichtung übertragen wird,
- eine Manipulation des Gerätes durch die Auswerteeinrichtung anhand des Sicherheitsdatensatzes erkennbar ist,
- die Messwerte zyklisch oder innerhalb eines vorgegebenen Zeitintervalls an die Auswerteeinrichtung übertragen werden,
- diese Messwerte auch übertragen werden, wenn die Sicherheitssensoren keine Änderung von Messwerten erfassen.

10. Auswerteeinrichtung zum Erkennen einer Manipulation eines Gerätes aufweisend:
- ein erstes Konfigurationsmodul (510) zum Festlegen von Sicherheitswerten für das Gerät;
- ein zweites Kommunikationsmodul (520) zum Bereitstellen eines Sicherheitsdatensatzes durch das Gerät, wobei
- der Sicherheitsdatensatz Messwerte über das Gerät umfasst,
- die Messwerte unausgewertet sind,
- der Sicherheitsdatensatz mittels eines symmetrischen und/oder asymmetrischen Verfahrens kryptographisch geschützt ist,
- die Messwerte durch Sicherheitssensoren des Gerätes erfasst werden,
- die Messwerte zyklisch oder innerhalb eines vorgegebenen Zeitintervalls an die Auswerteeinrichtung übertragen werden,
- diese Messwerte auch übertragen werden, wenn die Sicherheitssensoren keine Änderung von Messwerten erfassen, - ein zweites Kryptomodul (530) zum Entschlüsseln und/oder kryptographischen Prüfen der Messwerte;
- ein zweites Verarbeitungsmodul (540) zum Vergleichen der Messwerte mit den Sicherheitswerten durch die Auswerteeinrichtung, wobei
- das Vergleichen erfolgt, wenn das Entschlüsseln und/oder kryptographische Prüfen erfolgreich durchgeführt wird,
- ein Steuersignal bereitgestellt wird,
- das Steuersignal ein Ergebnis des Vergleichens und/oder ein Ergebnis des Entschlüsselns und/oder des kryptographischen Prüfens umfasst.

11. System zum Erkennen einer Manipulation eines Gerätes aufweisend:
- mindestens ein Gerät nach Anspruch 9;
- mindestens eine Auswerteinrichtung nach Anspruch 10;
- einen Kommunikationskanal mittels dessen das Gerät und die Auswerteeinrichtung miteinander kommunikativ verbunden sind.

12. Computerprogrammprodukt mit Programmbefehlen zur Durchführung der Verfahren nach einem der Ansprüche 1 - 8 und/oder einer Kombination der Verfahren.

13. Bereitstellungsvorrichtung für das Computerprogrammprodukt nach Anspruch 12 und/oder 13, wobei die Bereitstellungsvorrichtung das Computerprogrammprodukt speichert und/oder bereitstellt.

## Claims

1. Method for the computer-aided generation of a security data record for detecting manipulation, having the following method steps of:
- capturing (110) measured values relating to a device by means of security sensors (620, 720) of the device, wherein
- the measured values are not evaluated;
- cryptographically protecting (120) the measured values by means of a symmetrical and/or asymmetrical method;
- generating (130) the security data record by means of the device, wherein the security data record comprises the measured values;
- providing (140) the security data record at a communication interface by means of the device, wherein
- the security data record is transmitted to an evaluation device upon provision,
- manipulation of the device can be detected by the evaluation device on the basis of the security data record,
- the measured values are transmitted to the evaluation device cyclically or within a predefined interval of time,
- these measured values are also transmitted if the security sensors do not capture any change in measured values.

2. Method according to Claim 1, wherein, in order to cryptographically protect the measured values upon capture, cryptographic protection is provided by means of the symmetrical and/or asymmetrical method, wherein a private key is known solely to the device and/or solely to the respective security sensors (620, 720), in particular in an asymmetrical method.

3. Method according to one of the preceding claims, wherein
- for cryptographic protection, a data connection for transmitting the security data record to a or the evaluation device is cryptographically protected by means of a cryptographic method,
- the cryptographic method is the symmetrical and/or asymmetrical method or a further symmetrical and/or asymmetrical method,
- a private key is known solely to the device and/or a private key is known to the respective security sensors (620, 720), in particular in an asymmetrical method.

4. Method for detecting manipulation of a device by means of an evaluation device, having the following method steps of:
- determining security values for the device;
- providing a security data record by means of the device, wherein
- the security data record comprises measured values relating to the device,
- the measured values are not evaluated,
- the measured values are cryptographically protected by means of a symmetrical and/or asymmetrical method,
- the measured values are captured by security sensors of the device,
- the measured values are transmitted to the evaluation device cyclically or within a predefined interval of time,
- these measured values are also transmitted if the security sensors do not capture any change in measured values,
- decrypting and/or cryptographically checking the measured values;
- comparing the measured values with the security values by means of the evaluation device, wherein
- the comparison is carried out if the decryption and/or cryptographic checking is/are carried out successfully,
- a control signal is provided,
- the control signal comprises a result of the comparison and/or a result of the decryption and/or of the cryptographic checking.

5. Method according to Claim 4, wherein
- a public key which forms a key pair with a private key is known to the evaluation device in the asymmetrical method,
- wherein the private key is known solely to the device and/or respective security sensors (620, 720) of the device.

6. Method according to Claim 4 or 5, wherein the security data record is transmitted from the device to the evaluation device upon provision.

7. Method according to one of the preceding claims, wherein
- a data connection for providing the security data record is cryptographically protected by means of a cryptographic method,
- the cryptographic method is the symmetrical and/or asymmetrical method or a further symmetrical and/or asymmetrical method,
- a private key is known solely to the device and/or a private key is known to the respective security sensors (620, 720), in particular in an asymmetrical method.

8. Method according to one of the preceding claims, wherein the measured values are wirelessly provided.

9. Device for the computer-aided generation of a security data record for detecting manipulation, having:
- a first sensor module (410) for capturing measured values relating to the device by means of security sensors (620, 720) of the device, wherein
- the measured values are not evaluated;
- a first cryptographic module (420) for cryptographically protecting the measured values by means of a symmetrical and/or asymmetrical method;
- a first processing module (430) for generating the security data record by means of the device, wherein the security data record comprises the measured values;
- a first communication module (440) for providing the security data record at a communication interface (404) by means of the device, wherein
- the security data record is transmitted to an evaluation device upon provision,
- manipulation of the device can be detected by the evaluation device on the basis of the security data record,
- the measured values are transmitted to the evaluation device cyclically or within a predefined interval of time,
- these measured values are also transmitted if the security sensors do not capture any change in measured values.

10. Evaluation device for detecting manipulation of a device, having:
- a first configuration module (510) for determining security values for the device;
- a second communication module (520) for providing a security data record by means of the device, wherein
- the security data record comprises measured values relating to the device,
- the measured values are not evaluated,
- the security data record is cryptographically protected by means of a symmetrical and/or asymmetrical method,
- the measured values are captured by security sensors of the device,
- the measured values are transmitted to the evaluation device cyclically or within a predefined interval of time,
- these measured values are also transmitted if the security sensors do not capture any change in measured values,
- a second cryptographic module (530) for decrypting and/or cryptographically checking the measured values;
- a second processing module (540) for comparing the measured values with the security values by means of the evaluation device, wherein
- the comparison is carried out if the decryption and/or cryptographic checking is/are carried out successfully,
- a control signal is provided,
- the control signal is a result of the comparison and/or a result of the decryption and/or of the cryptographic checking.

11. System for detecting manipulation of a device, having:
- at least one device according to Claim 9;
- at least one evaluation device according to Claim 10;
- a communication channel which is used to communicatively connect the device and the evaluation device to one another.

12. Computer program product having program instructions for carrying out the methods according to one of Claims 1-8 and/or a combination of the methods.

13. Provision apparatus for the computer program product according to Claim 12 and/or 13, wherein the provision apparatus stores and/or provides the computer program product.

## Revendications

1. Procédé pour la génération assistée par ordinateur d'un ensemble de données de sécurité pour la détection de manipulation, comprenant les étapes suivantes :
- mesure (110) de valeurs de mesure concernant un appareil à l'aide de capteurs de sécurité (620, 720) de l'appareil,
- les valeurs de mesure n'étant pas analysées ;
- protection cryptographique (120) des valeurs de mesure au moyen d'un procédé symétrique et/ou asymétrique ;
- génération(130) de l'ensemble de données de sécurité par l'appareil, l'ensemble de données de sécurité comprenant les valeurs de mesure ;
- mise à disposition (140) de l'ensemble de données de sécurité au niveau d'une interface de communication par l'appareil,
- l'ensemble de données de sécurité étant transmis lors de la mise à disposition à un dispositif d'analyse,
- une manipulation de l'appareil pouvant être détectée par le dispositif d'analyse à l'aide de l'ensemble de données de sécurité,
- les valeurs de mesure étant transmises de manière cyclique ou dans un intervalle de temps prédéterminé au dispositif d'analyse,
- ces valeurs de mesure pouvant également être transmises lorsque les capteurs de sécurité ne détectent aucune modification des valeurs de mesure.

2. Procédé selon la revendication 1, dans lequel une protection cryptographique est assurée au moyen du procédé symétrique et/ou asymétrique pour la protection cryptographique des valeurs mesurées lors de la mesure, et dans lequel, en particulier dans le cas d'un procédé asymétrique, une clé privée est connue exclusivement de l'appareil et/ou exclusivement des capteurs de sécurité (620, 720) correspondants.

3. Procédé selon l'une des revendications précédentes, dans lequel
- pour la protection cryptographique, une liaison de données pour la transmission de l'ensemble de données de sécurité à un ou au dispositif d'analyse est protégée au moyen d'un procédé cryptographique,
- le procédé cryptographique est le procédé symétrique et/ou asymétrique ou un autre procédé symétrique et/ou asymétrique,
- plus particulièrement dans le cas d'un procédé asymétrique, une clé privée est connue exclusivement de l'appareil et/ou exclusivement des capteurs de sécurité (620, 720) correspondants.

4. Procédé pour la détection d'une manipulation d'un appareil par un dispositif d'analyse comprenant les étapes suivantes :
- détermination de valeurs de sécurité pour l'appareil ;
- mise à disposition d'un ensemble de données de sécurité par l'appareil,
- l'ensemble de données de sécurité comprenant des valeurs de mesure concernant l'appareil,
- les valeurs de mesure n'étant pas analysées,
- les valeurs de mesure étant protégées de manière cryptographique au moyen d'un procédé symétrique et/ou asymétrique,
- les valeurs de mesure étant mesurées par des capteurs de sécurité de l'appareil,
- les valeurs de mesure étant transmises de manière cyclique ou dans un intervalle de temps prédéterminé au dispositif d'analyse,
- ces valeurs de mesure étant également transmises lorsque les capteurs de sécurité ne détectent aucune modification des valeurs de mesure,
- déchiffrement et/ou vérification cryptographique des valeurs de mesure ;
- comparaison des valeurs de mesure avec les valeurs de sécurité par le dispositif d'analyse,
- la comparaison ayant lieu lorsque le déchiffrement et/ou la vérification cryptographique a été effectué(e) avec succès,
- un signal de commande étant généré,
- le signal de commande comprenant un résultat de la comparaison et/ou un résultat du déchiffrement et/ou de la vérification cryptographique.

5. Procédé selon la revendication 4, dans lequel
- dans le cas du procédé asymétrique, une clé publique, qui constitue une paire de clés avec une clé privée, est connue du dispositif d'analyse,
- la clé privée étant connue exclusivement de l'appareil et/ou des capteurs de sécurité (620, 720) correspondants de l'appareil.

6. Procédé selon la revendication 4 ou 5, l'ensemble de données de sécurité étant transmis lors de la mise à disposition par l'appareil au dispositif d'analyse.

7. Procédé selon l'une des revendications précédentes, dans lequel
- une liaison de données pour la mise à disposition de l'ensemble de données de sécurité est protégée de manière cryptographique au moyen d'un procédé cryptographique,
- le procédé cryptographique étant le procédé symétrique et/ou asymétrique ou un autre procédé symétrique et/ou asymétrique,
- plus particulièrement dans le cas d'un procédé asymétrique, une clé privée étant connue exclusivement de l'appareil et/ou des capteurs de sécurité (620, 720) correspondants.

8. Procédé selon l'une des revendications précédentes, les valeurs de mesure étant mises à disposition sans fil.

9. Appareil pour la génération assistée par ordinateur d'un ensemble de données de sécurité pour la détection de manipulation, comprenant :
- un premier module de capteur (410) pour la mesure de valeurs de mesure concernant l'appareil à l'aide de capteurs de sécurité (620, 720) de l'appareil,
- les valeurs de mesure n'étant pas analysées ;
- un premier module de cryptographie (420) pour la protection cryptographique des valeurs de mesure au moyen d'un procédé symétrique et/ou asymétrique ;
- un premier module de traitement (430)pour la génération de l'ensemble de données de sécurité par l'appareil, l'ensemble de données de sécurité comprenant les valeurs de mesure ;
- un premier module de communication (440) pour la mise à disposition de l'ensemble de données de sécurité au niveau d'une interface de communication (404) par l'appareil,
- l'ensemble de données de sécurité étant transmis lors de la mise à disposition à un dispositif d'analyse,
- une manipulation de l'appareil pouvant être détectée par le dispositif d'analyse à l'aide de l'ensemble de données de sécurité,
- les valeurs de mesure étant transmises de manière cyclique ou dans un intervalle de temps prédéterminé au dispositif d'analyse,
- ces valeurs de mesure étant également transmises lorsque les capteurs de sécurité ne détectent aucune modification des valeurs de mesure.

10. Dispositif d'analyse pour la détection d'une manipulation d'un appareil, comprenant :
- un premier module de configuration (510) pour la détermination de valeurs de sécurité pour l'appareil ;
- un deuxième module de communication (520) pour la mise à disposition d'un ensemble de données de sécurité par l'appareil,
- l'ensemble de données de sécurité comprenant des valeurs de mesure concernant l'appareil,
- les valeurs de mesure n'étant pas analysées,
- l'ensemble de données de sécurité étant protégé de manière cryptographique au moyen d'un procédé symétrique et/ou asymétrique,
- les valeurs de mesure étant mesurées par des capteurs de sécurité de l'appareil,
- les valeurs de mesure étant transmises de manière cyclique ou dans un intervalle de temps prédéterminé au dispositif d'analyse,
- ces valeurs de mesure étant également transmises lorsque les capteurs de sécurité ne détectent aucune modification des valeurs de mesure,
- un deuxième module de cryptographie (530) pour le déchiffrement et/ou la vérification cryptographique des valeurs de mesure ;
- un deuxième module de traitement (540) pour la comparaison des valeurs de mesure avec les valeurs de sécurité par le dispositif d'analyse,
- la comparaison ayant lieu lorsque le déchiffrement et/ou la vérification cryptographique est effectuée avec succès,
- un signal de commande étant mis à disposition,
- le signal de commande comprenant un résultat de la comparaison et/ou un résultat du déchiffrement et/ou de la vérification cryptographique.

11. Système pour la détection d'une manipulation d'un appareil, comprenant :
- au moins un appareil selon la revendication 9 ;
- au moins un dispositif d'analyse selon la revendication 10 ;
- un canal de communication au moyen duquel l'appareil et le dispositif d'analyse sont reliés en communication entre eux.

12. Produit de programme informatique avec des instructions de programme pour l'exécution des procédés selon l'une des revendications 1 à 8 et/ou d'une combinaison de ces procédés.

13. Dispositif de mise à disposition pour le produit de programme informatique selon la revendication 12 et/ou 13, le dispositif de mise à disposition gardant en mémoire et/ou mettant à disposition le produit de programme informatique.
